(19) Europäisches Patentamt / European Patent Office / Office européen des brevets

(11) **EP 2 314 409 A1**

(12) **EUROPEAN PATENT APPLICATION**

(43) Date of publication:
27.04.2011 Bulletin 2011/17

(51) Int Cl.:
*B23K 11/24* (2006.01)    *B23K 9/10* (2006.01)

(21) Application number: 09425412.5

(22) Date of filing: 20.10.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicants:
• CEA Costruzioni Elettromeccaniche Annettoni
S.p.A
23900 Lecco (LC) (IT)
• Politecnico di Milano
20133 Milano (IT)

(72) Inventors:
• Annettoni, Fabio
23900 Lecco (LC) (IT)
• Toscani, Sergio
26841 Casalpusterlengo (LO) (IT)
• Superti Furga, Gabrio
20133 Milano (MI) (IT)
• Tironi,  Enrico
20133 Milano (MI) (IT)

(74) Representative: Ciceri, Fabio et al
Perani & Partners
Piazza San Babila, 5
20122 Milano (IT)

(54) **Electric welding machine having a power circuit to limit voltage fluctuations induced in the mains**

(57)    The present invention concerns an electric welding machine having a power circuit for supplying power to the welding machine from the mains. The power circuit comprises: an AC/DC converter stage (2), designed to receive an AC voltage (Vac) from said mains at its input and to generate a first DC voltage (Vdc') at its output; an up converter stage (3), designed to receive said first DC voltage (Vdc') at its input and to generate a second DC voltage (Vdc'') at its output; an output stage (10) in electric communication with said up converter stage (3), and designed to generate an output voltage (Vsal) suitable for the welding process at its output, and a pair of output terminals (4A, 4B) designed to have a load connected thereto, said output voltage (Vsal) being available at said output terminals. The power circuit is **characterized in that** it comprises energy accumulation means (5) interposed and in electric communication between the output of said up converter stage (3) and the output stage (10), said energy accumulation means (5) being able to absorb power changes of said mains as said output voltage (Vsal) changes, due to the power absorbed by the load, to limit a voltage fluctuation induced in said mains.

Fig. 1

EP 2 314 409 A1

**Description**

"Electric welding machine having a power circuit to limit voltage fluctuations induced in the mains" *** ** ***

The present invention relates to an electric welding machine having a power circuit that can limit voltage fluctuations, and that can particularly but not exclusively limit flicker fluctuations induced in the mains, according to the preamble of claim 1.

The problem of power supply quality is becoming increasingly felt, due to the increasing number of both appliances that can induce noise in the power distribution network and appliances sensitive to noise in such power network.

In an attempt to address the above problem, increasingly stringent restrictions are imposed by standards to noise levels emitted from mains-connected appliances.

Flicker, i.e. fluctuation of the effective power voltage value, is a particularly undesired type of noise.

Flicker is believed to be caused by connection and disconnection of discontinuously operated mains-connected loads.

In other words, flicker derives from mains voltage drop changes resulting from power drawn by certain loads.

The amount of flicker depends on changes of drawn power with respect to the failure level in the delivery node (i.e. on short circuit power) and on the frequency of such changes.

One of the effects of flicker, which is easily perceivable by a human eye, is the fluctuation of light flux transmitted by a lamp. Particularly, the frequency sensitivity threshold for a human eye is slightly lower than 10 Hz, whereby the voltage change admissible limit is 0.3%, above which there is an evident and disturbing flicker for a human eye.

Electric welding machines are among flicker-causing loads, their operation principle being characterized by intermittent absorptions from the mains.

During operation of a welding machine, the power absorbed by the load connected to the welding machine fluctuates with frequencies of various levels and may be responsible for mains voltage deviations and hence flicker.

In view of the above state of the art, the object of the present invention is to minimize flicker noise induced in the mains by a welding machine during welding processes.

According to the present invention, this object is fulfilled by a welding machine having a power circuit as characterized in claim 1.

The present invention provides an electric welding machine having a power circuit that uses energy accumulation means, such as capacitor banks, as an energy flywheel. As power drawing changes occur, such capacitor banks allow reduced fluctuation of the power being drawn and, as a result, limit the noise to the loads electrically proximate the welding machine.

The characteristics and advantages of the invention will appear from the following detailed description of one practical embodiment, which is illustrated without limitation in the annexed drawings, in which:

- Figure 1 shows a block diagram of a possible power circuit for an electric welding machine of the present invention;
- Figure 2 is a principle block diagram of the means for controlling the power circuit of Figure 1;
- Figures 3 and 4 are graphical simulations of the curves of effective power voltage values in response to flicker noise induced in the mains, when the power circuit of Figure 1 is implemented (Figure 3) or not implemented (Figure 4) in an electric welding machine respectively.

Referring to the accompanying figures, numeral 1 designates a power circuit which supplies power to an electric welding machine (not shown), such as an arc-welding machine.

The power circuit 1 is preferably disposed within the electric welding machine and comprises:

- an AC/DC converter stage 1, designed to receive an AC voltage Vac from the mains at its input and to generate a first DC voltage Vdc' at its output;
- an up converter stage 3, designed to receive a DC voltage Vdc' at its input and to generate a second DC voltage Vdc" at its output and
- an output stage 10, which is in electric communication with the up converter stage 3 and is designed to generate an output voltage Vsal suitable for the welding process at its output.

It shall be noted that the up converter stage 3 allows the voltage Vdc" to be higher than the voltage Vdc' at the input of the up converter stage, whereas the output stage provides the required voltage for welding.

The power circuit 1 further has a pair of output terminals 4A; 4B, which act as electrodes.

Particularly, one of these terminals 4A, 4B may be the object to be welded (not shown) and the other of these terminals 4A, 4B may be a bar that is usually secured in a clamp handle.

The output voltage Vsal is available at these output terminals 4A, 4B, which means that by moving the bar (e.g. the output terminal 4A) into contact with the object (e.g. the output terminal 4B), a voltaic arc may be formed, whose voltage corresponds to the voltage Vsal, that can melt the bar metal, thereby forming a welded joint.

Advantageously, in order to limit voltage fluctuations, such as flicker, induced in the mains during welding, the power circuit 1 comprises energy accumulation means 5 interposed and in electric communication between the output of said up converter stage 3 and the output stage 10.

The energy accumulation means 5 can store an amount of energy "W" that is a function of the size of such energy accumulation means and of the up converter stage 3 considering the power of the welding machine, as described in greater detail hereinafter.

Such energy accumulation means 5 are designed to absorb the power changes that would otherwise occur in the mains, in response to the power drawn by the load during welding.

In other words, as power drawing changes occur, the power circuit 1 causes the mains to slowly follow the fluctuations, whereby the energy storage means 5, due to a consistent voltage change at their terminals, can level AC power deviations on the mains side.

The result is that fluctuations of the power being drawn are reduced. which limits noise (flicker) to the loads electrically proximate the welding machine.

Therefore, with energy stored and under stationary operating conditions of the welding machine (i.e. with the welding machine on but no load associated therewith), the DC voltage Vdc" generated at the output of the up converter stage 3 is provided at the terminals of the energy accumulation means 5.

The power circuit 1 for the electric welding machine may also have a down converter stage 9, which is designed to receive a second DC voltage Vdc" at its input and generate a third DC voltage Vdc''' at its output, the latter being deliverable, for instance, through the output stage 10, to the pair of output terminals 4A and 4B.

If the down converter stage 9 is implemented, the energy storage means 5 are interposed and in electric communication between the output of said up converter stage 3 and the input of said down converter stage 9.

The second down converter stage 9 is embodied by a DC/DC step-down converter stage.

The dc/dc step-down converter 9 ensures stabilization of the DC voltage Vdc''' supplied to the output stage 10 for generating the output voltage Vsal, i.e. the electric arc in the case of an arc welding machine.

In addition to the energy accumulation means 5, the power circuit 1 also comprises control means 6, for controlling the up converter stage 3.

Particularly, the control means 6 are designed to control the up converter stage 3, for the power circuit 1 to absorb a substantially constant power from the mains, preferably equal to the average power required by the welding process in the long term.

In one embodiment, the up converter stage 3 comprises two step-up DC/DC converters in interleaved configuration.

Particularly, the interleaved connection consists in that the two step up DC/DC converters are connected in parallel, with phase shifted switching of the two converters.

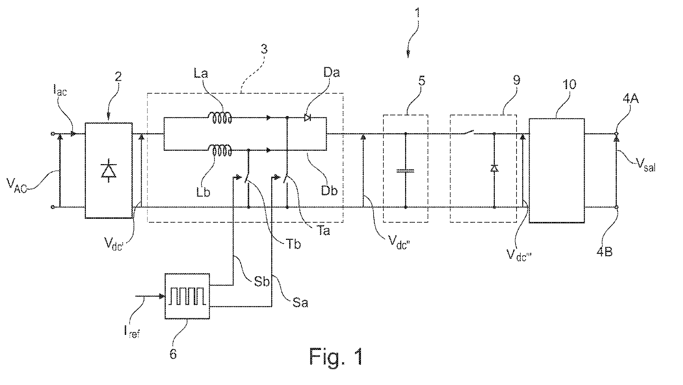

Also with reference to Figure 1, the series composed of the diode DA, the inductor La and the transistor Ta of one of the two converters is in parallel with the series composed of the diode Db, the inductor Lb and the transistor Tb of the other converter.

Furthermore, the transistors Ta and Tb of each converter are in signal communication with the control means 6.

Particularly, each transistor Ta and Tb is controlled to the conduction or off states by a corresponding control signal Sa or Sb.

Such control signals Sa and Sb may be generated by the control means 6 according to a reference current signal Iref, as described in greater detail below.

Each control signal Sa and/or Sb preferably has a constant switching frequency (which means that the conduction and interdiction times for each transistor are constant with time, although durations may be different) but is in phase opposition to the other (for instance, when the signal Sa controls the transistor Ta to the conduction state, then the signal Sb controls the transistor Tb to the off state and vice versa)

This allows the AC current Iac absorbed by the mains to have a very low ripple, where ripple is intended to mean a low noise having a high switching frequency, overlapping the sinusoidal waveform.

In an alternative embodiment of the up converter stage 3, the latter may be implemented as a single step-up DC/DC converter.

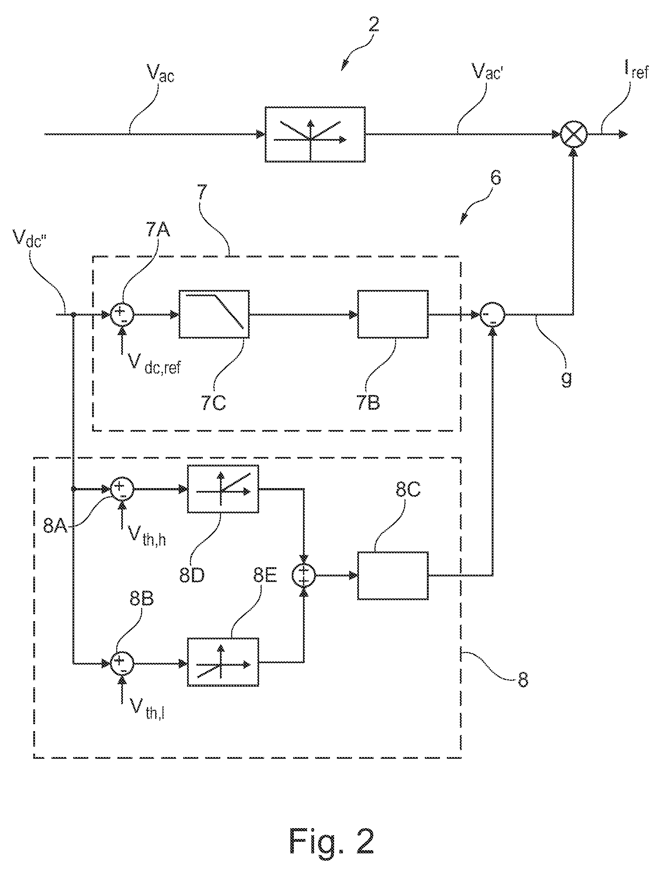

The control means 6 receive the reference current signal Iref at their input and generate the control signals Sa and Sb at their output, and are preferably embodied by a microcontroller comprising two control circuits 7, 8 (Fig. 2).

Such control circuits 7, 8 are advantageously designed for alternate actuation. Particularly, the control circuits 7, 8 can be actuated according to the value of voltage Vdc" at the terminals of the energy accumulation means 5. Therefore, according to the voltage value Vdc" at the terminals of the energy accumulation means 5, either of the control circuits 7, 8 in the microcontroller is actuated.

It shall be noted that, during the welding process, the voltage value Vdc" at the terminals of the energy accumulation means 5 changes and the operation of the control circuits 7, 8 is dependent on that particular voltage value Vdc" at the terminals of the energy accumulation means 5.

Particularly, the first control circuit 7 is designed for the voltage Vdc" at the terminals of the energy accumulation means 5 to be free to oscillate within a predetermined range of values, with the lowest limit being designated by Vth,1 and the highest limit being designated by Vth,h, whereas its mean value is maintained at a predetermined voltage value Vdc,ref.

The first control circuit 7 in the microcontroller advantageously maintains the mean voltage value at the terminals of the energy accumulation means 5 equal to the predetermined value Vdc,ref.

For this purpose, in one embodiment, the first control circuit 7 will comprise:

- a first comparator device 7A for comparing the voltage Vdc" at the terminals of said energy accumulation means 5 with such predetermined voltage value Vdc,ref,
- a low pass filter 7C, whose passband is much lower than the frequencies of the noise (flicker) to be reduced;
- a first controller device 7B, preferably of proportional-integral type, whose gain is coordinated with the low pass filter 7C; so that the assembly composed of the controller 7B and the low pass filter 7C generate low dynamics with respect to the frequencies of the noise (flicker) to be reduced.

It shall be noted that, if the noise is of the flicker type, it has a characteristic frequency of less than 10 Hz, which allows control of the frequency of actuation of the pole of the low pass filter 7C and hence the controller 7B.

Therefore, at the terminals of the accumulation means 5 voltage is maintained between two levels Vth,h and Vth,l, which preferably have very distant values, thereby ensuring as wide a range as possible, to prevent the welding machine from operating in conditions that might induce voltage fluctuations, such as flicker, in the mains.

Particularly, the highest limit Vth,h of the range is determined by the maximum admissible voltage for the DC/DC converter/s of the stage 3, whereas the lowest limit Vth,1 of the range is determined by the minimum operation value for the DC/DC converter/s of the stage 3.

In order to increase the operating range, the voltage reference VDC,ref is set to a value slightly lower than the highest limit Vth,h of the electric welding machine in the idle state (i.e. on but under no load).

In this operating state, the voltage value Vdc" and the corresponding value of energy stored W in the accumulation means 5 are initially close to the highest value. Advantageously, by delivering energy during the transient at the start of the welding process, the energy accumulation means 5 can more efficiently attenuate the abrupt increase of power required of the mains, with flicker limiting effects..

Likewise, when the electric welding machine operates in full power mode, the voltage reference Vdc,ref is advantageously set to a value slightly higher than the lowest limit Vth,l, to most efficiently attenuate, by energy absorption, the decrease of power required of the mains during the transient at the end of the welding process.

The second control circuit 8 is designed in such a manner that, if said voltage Vdc" at the terminals of the energy accumulation means 5 reaches one of the limits of said range of values, due to a particular power absorption by the load, then the voltage Vdc" at the terminals of the energy accumulation means 5 is forced to be set to one of the limit values of the range.

For example, if the voltage Vdc" is equal to or higher than the highest limit Vth,h, then the second control circuit 8 limits such voltage Vdc" to the value of such highest limit.

For this purpose, in one embodiment, the second control circuit 8 comprises:

- a comparator device 8A in series with a clipping circuit 8D;
- a comparator device 8B in series with a clipping circuit 8E;
- a controller 8C, preferably of proportional-integral type, whose gains are higher than those of the controller 7B; particularly, the gains of the controller 8C are calibrated with dynamics adapted to maintain the voltage Vdc" at the terminals of the energy accumulation means 5 within the admitted voltage limit values (i.e. within the highest limit value Vth,h or the lowest limit value Vth,1) or return it within such voltage limits within times close to the period of the mains frequency.

It shall be noted that the comparator device 8A is adapted to compare the voltage Vdc" at the terminals of the energy accumulation means 5 with the voltage value Vth,h representative of the highest limit of the range and the clipping circuit 8D is adapted to limit the voltage to the highest value Vth,h.

The comparator device 8B is also adapted to compare the voltage Vdc" at the terminals of the energy accumulation means 5 with the voltage value Vth,1 representative of the lowest limit of the range and the clipping circuit 8E is adapted to limit the voltage to the lowest value Vth,l.

In other words, if the voltage Vdc" at the terminals of the energy accumulation means 5, reaches the lowest limit Vth,1 during the welding process, then the second control circuit 8 maintains the voltage value at the terminals of the energy accumulation means 5 equal to the value Vth,1, through the clipper 8E and the controller 8C, and likewise, if the voltage Vdc" at the terminals of the energy accumulation means 5 reaches the highest limit Vth,h (through the clipper 8D and the controller 8C).

In an alternative embodiment, the control means 6 may be implemented as a microcontroller that can implement a PWM control or other similar techniques.

The Iref current signal at the input of the control means 6 may be expressed as:

$$\text{Iref(t)} = G * \text{Vac'(t)}$$

where G designates the sum of the outputs of the controllers 7B and 8C in the control means 6.

Particularly, the reference current Iref is a feedback signal that is a function of the voltage at the input of the step up DC/DC converter stage 3 and the mean voltage value at the terminals of the energy accumulation means 5 maintained by one of the two circuits 7, 8 in the microcontroller.

Therefore, when the first circuit 7, i.e. the controller 7B, is operating, the current Iref changes very slowly, so that the effective value of current Iac absorbed by the step-up converter stage 3 changes very slowly with respect to flicker frequencies, so that flicker does not occur in the mains, whereas when the operating circuit is the second circuit 8, i.e. the controller 8C, Iref changes quickly, so that the current absorbed by the step-up converter stage 3 can effectively control the voltage Vdc", although flicker noise may occur.

In both cases, the current Iac absorbed by the step-up converter stage 3 reproduces the mains voltage waveform and is in phase therewith.

The control of the step-down voltage converter stage 9 follows the same principles as the step-up converter stage 3.

The AC/DC converter stage 2 is embodied by a rectifier, for rectifying the input power voltage Vac.

In a preferred embodiment, the energy accumulation means 5 are embodied by a plurality of capacitor banks electrically connected to each other in parallel, in series or in series-parallel combinations.

The overall sizing of capacitor banks, which is represented in Figure 1 as a single capacitor C, is a function of the maximum and minimum admissible operating voltages of the step-up stage 3, and obviously of the rated power of the welding machine and the characteristics of the dielectric that forms the capacitors.

Sizing of the capacitor bank/s, as mentioned above, requires them to be able to absorb the power deviations of the welding process.

The energy that can be stored in a capacitor C is known to be:

$$W = 1/2 \, C \, \text{Vdc}^2$$

where Vdc is the voltage that can be applied to the terminals of the capacitor C.

Therefore, the maximum energy change that the capacitor C or the plurality of capacitor banks is able to absorb, assuming the above conditions, is:

$$\Delta W_a = \frac{1}{2} C (Vth,h^2 - Vdc,ref^2)$$

and the maximum energy change that the capacitor can return is:

$$\Delta W_g = \frac{1}{2} C (Vdc,ref^2 - Vth,l^2)$$

Based on such formulas, and assuming the above conditions, if Vdc,ref is lower than Vth,h but higher than Vth,1, then the energy accumulation means 5, if implemented by one or more capacitor banks C, must be sized to be larger than:

$$C \geq \frac{2\Delta W_g}{Vdc,ref^2 - Vth,l^2} \qquad C \geq \frac{2\Delta W_a}{Vth,h^2 - Vdc,ref^2}$$

Therefore, given the power of the electric welding machine, both the maximum voltage Vth,h and the minimum voltage Vth,1 at which the step-down DC/DC converter/s 3 must operate are also defined, as well as the capacity value of the capacitor C.

Conversely, once an amount ΔW of energy that can be stored (positive) or drawn (negative) in or from the capacitor charged to the voltage Vdc,ref, the new voltage to be set for the capacitor C is

$$V = \sqrt{Vdc,ref^2 + \frac{2}{C}\Delta W}$$

with a limit tending to ΔW > - ½ C Vdc,ref$^2$.

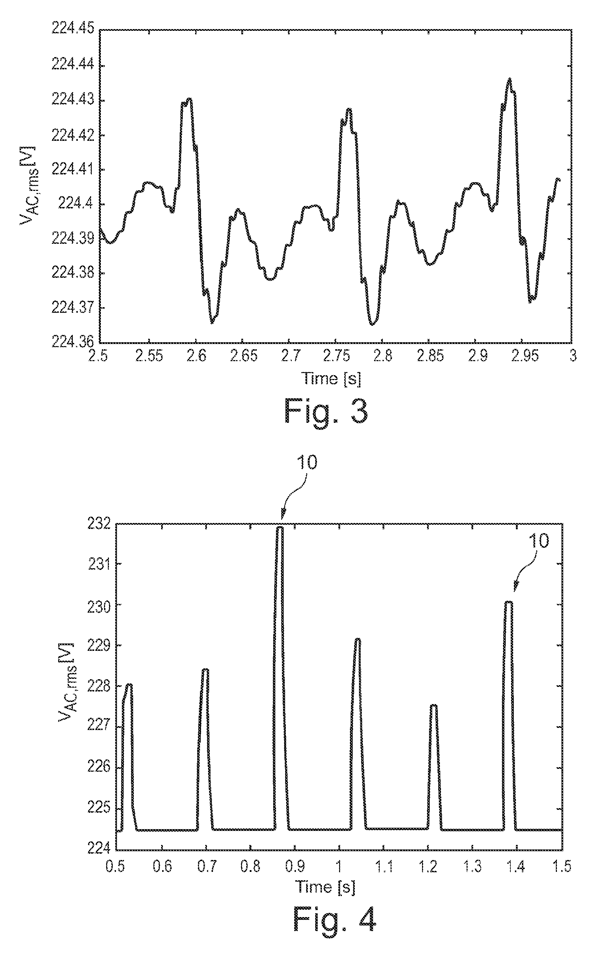

Figures 3 and 4 are graphical simulations of the curves of effective power voltage values in response to flicker noise induced in the mains, when the power circuit of Figure 1 is implemented (Figure 3) or not implemented (Figure 4) in an electric welding machine respectively, particularly when there is a power failure.

Given a maximum power Pmax of the welding machine and in case of a short failure of the power Pmax, for a duration Tdrop, there is an energy change ΔW equal to Pmax for Tdrop, that must be filtered by the accumulation means 5.

For example, pursuant to the testing regulations in force, given a maximum power Pmax of 3275 W, a noise frequency of 5.83 Hz and a failure duration Tdrop of 0.0075 s, the energy change to be filtered is ΔW= 24.5 J.

As shown in Figure 3, assuming the above, it shall be noted that with a mains impedance compliant with the regulations, the effective value of voltage Vac has actually zero residual perturbations which, in large scale, are within 0.03% oscillation amplitude at a frequency of 5.83 Hz.

Referring to Figure 4, with the above quantities and without the power circuit 1 for flicker removal, welding power changes directly affect the mains, with the curve of the effective power voltage Vac having peaks 10 that induce flicker in the mains.

Those skilled in the art will obviously appreciate that a number of changes and variants may be made to the arrangements as described hereinbefore to meet specific needs, without departure from the scope of the invention, as defined in the following claims.

**Claims**

1. An electric welding machine having a power circuit for supplying power to said welding machine from the mains, said power circuit comprising:

   - an AC/DC converter stage (2), designed to receive an AC voltage (Vac) from said mains at its input and to generate a first DC voltage (Vdc') at its output;
   - an up converter stage (3), designed to receive a DC voltage (Vdc') at its input and to generate a second DC voltage (Vdc") at its output;
   - an output stage (10) is in electric communication with said up converter stage (3), and designed to generate an output voltage (Vsal) suitable for the welding process at its output;
   - a pair of output terminals (4A, 4B) designed to have a load connected thereto, said output voltage (Vsal) being available at said output terminals:

     **characterized in that** it comprises energy accumulation means (5) interposed and in electric communication between the output of said up converter stage (3) and the output stage (10), said energy accumulation means (5) being able to absorb power changes of said mains as said output voltage (Vsal) changes, due to the power absorbed by the load, to limit a voltage fluctuation induced in said mains.

2. An electric welding machine as claimed in claim 1, wherein said power circuit comprises a down converter stage

(9), which is designed to receive a second voltage (Vdc") at its input and generate a third DC voltage (Vdc"') at its output, which is available at said output stage (10) to generate said output voltage (Vsal).

3. An electric welding machine as claimed in claim 2, wherein said energy accumulation means (5) are interposed and in electric communication between the output of said up converter stage (3) and the input of said down converter stage (9).

4. An electric welding machine as claimed in claim 1, wherein said power circuit comprises control means (6) for controlling said up converter stage (3), said control means (6) being designed to impose a substantially constant power absorption from said mains, to said power circuit (1).

5. An electric welding machine as claimed in claim 4, wherein said power absorption imposed by said control means is equal to the mean power value required by the welding process.

6. An electric welding machine as claimed in claim 4, wherein said control means (6) comprise a microcontroller having two control circuits (7, 8) designed to be alternately actuated according to the value of said second voltage (Vdc") on the energy accumulation means (5).

7. An electric welding machine as claimed in claim 6, wherein:

   - a first control circuit (7) of said two circuits (7, 8) is designed so that said second voltage (Vdc") is free to oscillate within a range of values (Vth,1; Vth,h), so that said first control circuit (7) maintains the mean voltage value at the terminals of said energy accumulation means (5) equal to said predetermined voltage value (Vdc, ref);
   - a second control circuit (8) of said two circuits (7, 8) is designed so that if said second voltage (Vdc") at the terminals of said energy accumulation means (5) reaches one of the limits of said range of voltage values (Vth, l; Vth,h), then said second voltage (Vdc") is maintained within the limits of said range of voltage values.

8. An electric welding machine as claimed in claim 6, wherein said first control circuit (7) comprises:

   - a first comparator device (7A) for comparing said second voltage (Vdc") at the terminals of said energy accumulation means (5) with said predetermined voltage value (Vdc,ref),
   - a low pass filter (7C), whose passband is much lower than the frequencies of the noise to be reduced;
   - a first controller device (7B), whose gain is coordinated with said low pass filter (7C), so that the assembly composed of the controller (7B) and the low pass filter (7C) generate low dynamics with respect to the frequencies of the noise to be reduced.

9. An electric welding machine as claimed in claim 6, wherein said second control circuit (8) comprises:

   - a second comparator device (8A) connected in series with a first clipping circuit (8D), said second comparator device (8A) being adapted to compare said second voltage (Vdc") at the terminals of said energy accumulation means (5) with the voltage value (Vth,h) of the highest limit of the range of values, and said first clipping circuit (8D) being adapted to limit said second voltage (Vdc") to the voltage value (Vth,h) of the highest limit of the range of values;
   - a third comparator device (8B) connected in series with a second clipping circuit (8E), said third comparator device (8B) being adapted to compare the second voltage (Vdc") at the terminals of said energy accumulation means (5) with the voltage value (Vth,1) of the lowest limit of the range of values, and said second clipping circuit (8E) being adapted to limit said second voltage (Vdc") to the voltage value (Vth,l) of the lowest limit of the range of values;
   - a controller (8C) having a high gain with respect to the gain value of said controller (7B) to maintain said second voltage (Vdc") at the terminals of said energy accumulation means (5) within the limits of said range of values (Vth,1; Vth,h).

10. An electric welding machine as claimed in claim 2, wherein said second down converter stage (9) is a step-down DC/DC voltage converter stage.

11. An electric welding machine as claimed in claim 1, wherein said up converter stage (3) comprises two step-up DC/DC voltage converters connected in parallel, wherein said two step-up DC/DC voltage converters are switched in a phase shifted manner.

12. An electric welding machine as claimed in any preceding claim, wherein the energy accumulation means (5) comprise a plurality of capacitor banks (C) which are sized as a function of the maximum and minimum operating voltage admissible by said up converter stage (3) as well as the rated power of said welding machine.

13. An electric welding machine as claimed in any preceding claims, wherein said AC/DC converter (2) comprises a rectifier for rectifying the AC power voltage (Vac).

Fig. 1

Fig. 2

Fig. 3

Fig. 4

Europäisches
Patentamt

European
Patent Office

Office européen
des brevets

# EUROPEAN SEARCH REPORT

Application Number

EP 09 42 5412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/015973 A1 (LINCOLN GLOBAL INC [US]) 27 February 2003 (2003-02-27) * page 7, line 6 - page 7, line 6; claims 1-45; figure 1 * | 1,11-13 | INV. B23K11/24 B23K9/10 |
| X | US 5 991 169 A (KOOKEN TODD ERIC [US]) 23 November 1999 (1999-11-23) * column 6, line 19 - column 10, line 4; figures 1-7B * | 1,4-7 | |
| X | US 7 564 706 B1 (HERBERT EDWARD [US]) 21 July 2009 (2009-07-21) * column 10, line 53 - column 13, line 19; figures 1,4,5,9,10,12,13 * | 1-4,10, 12,13 | |
| X | US 5 786 992 A (VINCIARELLI PATRIZIO [US] ET AL) 28 July 1998 (1998-07-28) * column 6, line 2 - column 11, line 6; figures 1,7,9 * | 1 | |
| | ----- | | TECHNICAL FIELDS SEARCHED (IPC)  B23K |

The present search report has been drawn up for all claims

| Place of search | Date of completion of the search | Examiner |
|---|---|---|
| Munich | 12 April 2010 | Concannon, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

## ANNEX TO THE EUROPEAN SEARCH REPORT
## ON EUROPEAN PATENT APPLICATION NO.

EP 09 42 5412

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2010

| Patent document cited in search report | | Publication date | Patent family member(s) | | Publication date |
|---|---|---|---|---|---|
| WO 03015973 | A1 | 27-02-2003 | AT | 413250 T | 15-11-2008 |
| | | | BR | 0208721 A | 20-07-2004 |
| | | | CA | 2441365 A1 | 27-02-2003 |
| | | | EP | 1419028 A1 | 19-05-2004 |
| | | | JP | 2004538154 T | 24-12-2004 |
| | | | MX | PA03010087 A | 10-03-2004 |
| US 5991169 | A | 23-11-1999 | IT | RM990155 A1 | 12-09-2000 |
| US 7564706 | B1 | 21-07-2009 | NONE | | |
| US 5786992 | A | 28-07-1998 | DE | 69524465 D1 | 24-01-2002 |
| | | | DE | 69524465 T2 | 23-05-2002 |
| | | | DE | 69533206 D1 | 29-07-2004 |
| | | | EP | 0676854 A2 | 11-10-1995 |
| | | | JP | 8065889 A | 08-03-1996 |
| | | | JP | 2001190074 A | 10-07-2001 |

EPO FORM P0459

For more details about this annex : see Official Journal of the European Patent Office, No. 12/82